(19) Europäisches Patentamt
European Patent Office
Office européen des brevets

(11) **EP 4 060 064 A1**

(12) **EUROPEAN PATENT APPLICATION**

(43) Date of publication:
**21.09.2022 Bulletin 2022/38**

(21) Application number: **21305327.5**

(22) Date of filing: **17.03.2021**

(51) International Patent Classification (IPC):
***C22C 1/05*** *(2006.01)*    ***C22C 32/00*** *(2006.01)*

(52) Cooperative Patent Classification (CPC):
(C-Sets available)
**C22C 32/00; C22C 1/053;** B22F 2998/10    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Université de Lorraine
54000 Nancy (FR)**
• **The Registrar, Indian Institute of Science
Bangalore 560 012,
Karnataka State (IN)**

(72) Inventors:
• **TOTH, Laszlo
57000 Metz (FR)**

• **KAILAS, Satish Vasu
560012 Bangalore (IN)**
• **ZHAO, Yajun
57000 Metz (FR)**
• **PARIYAR, Abhishek
734301 Kalimpong- West Bengal (IN)**
• **PONÇOT, Marc
54120 Saint-Nicolas -de-Port (FR)**
• **NOVELLI, Marc
57070 Metz (FR)**
• **VU, Viet Quoc
57070 Metz (FR)**

(74) Representative: **Gevers & Orès
Immeuble le Palatin 2
3 Cours du Triangle
CS 80165
92939 Paris La Défense Cedex (FR)**

(54) **METAL MATRIX POLYMER DERIVED CERAMIC COMPOSITES AND PROCESSES OF PRODUCTION AND USES THEREOF**

(57)    The present invention is in the field of metal matrix polymer derived ceramic composites, processes of production and uses thereof. In particular, the invention concerns metal matrix polymer derived ceramic composites comprising ceramic nanoparticles, processes of production comprising a step of severe plastic deformation, and uses thereof.

EP 4 060 064 A1

(52) Cooperative Patent Classification (CPC): (Cont.)

C-Sets
B22F 2998/10, B22F 2009/043, B22F 3/02,
B22F 3/18;
B22F 2998/10, B22F 2009/043, B22F 3/02,
B22F 3/20

**Description**

The present invention is in the field of metal matrix polymer derived ceramic composites, processes of production and uses thereof. In particular, the invention concerns metal matrix polymer derived ceramic composites comprising ceramic nanoparticles, processes of production comprising a step of severe plastic deformation, and uses thereof.

Metal matrix composites (MMCs) are composite materials with at least two constituent parts, one being a metal matrix phase necessarily, the other material may be a different metal or another material, such as a ceramic, metal oxide or organic compound, generally in the form of hard reinforcing fibers, whiskers or particles.

The need for different material properties for a given structural element from metal led to the development of alloyed metals. The general approach so far was that the selected metal was alloyed with other metals, or composites were made by combining different materials. These procedures permitted in particular to tune Young's modulus, yield strength and/or conductivity.

In structural applications, the matrix of MMCs is usually a low density metal alloy (e.g. aluminum, magnesium or titanium).

MMCs have in general high strength, are lightweight structural materials, and are thus for example used in aircraft, helicopters and spacecraft.

MMCs with ultrafine grained structures, as well as composites with a nanostructure can be obtained by severe plastic deformation methods. These methods yield materials with high strength.

However, such MMCs are not suitable to prepare components that are exposed to temperatures higher than their fabrication temperature. Indeed, a significantly high grain growth occurs when these materials are exposed to high temperatures.

Furthermore, such MMCs are obtained at the cost of a severe loss in ductility.

In addition, the massive study of alloys as mentioned above led to the existence of hundreds of different alloy metals which make their recycling very complex, and in many cases, even impossible.

Therefore, the development of new MMCs that overcome the above-mentioned drawbacks is strongly needed.

Accordingly, it is an object of the present invention to provide MMCs with good ductility and thermal stability, while at the same time having high strength. Indeed, the materials of the invention are ultra-fine grained which maintain significant ductility. In addition, the processes of preparation of the materials of the invention give very high grain boundary stability at high temperatures (even at 500°C for example for aluminum).

Another aim of the present invention is to provide MMC with a metal of any kind, and processes which are applicable to any metal, leading to materials with properties that can be tuned to achieve aimed Young's modulus, yield strength, ductility, and/or thermal resistance with no need to use said metal in an alloy.

Another aim of the present invention is to provide a process without any health hazard, for example with no direct handling of toxic materials such as nano-size powder particles.

Thus, the present invention relates to a process for preparing a metal matrix polymer derived ceramic composite, said process comprising the stages of:

i) severe plastic deformation on a composition M comprising:

◦ a metal in micro powder form; and
◦ cross-linked polymer microparticles, said polymer being a precursor of a ceramic, in particular poly(methylhydrosiloxane) cross-linked with 1,4-diazabicyclo [2.2.2] octane (DABCO),

to obtain a severe plastic deformed composition M';
ii) pyrolysis of the composition M' to obtain the metal matrix polymer derived ceramic composite.

It is noted that said cross-linked poly(methylhydrosiloxane) cross-linked with 1,4-diazabicyclo [2.2.2] octane (DABCO) can be used for any metal.

Hence, the process of the invention is devoid of any step of friction stir processing.

In a particular embodiment, the invention concerns a process as defined above, comprising the stages of:

i) severe plastic deformation on a composition M comprising:

◦ a metal in micro powder form; and
◦ cross-linked polymer microparticles, said polymer being a precursor of a ceramic;

to obtain a severe plastic deformed composition M' comprising said metal and cross-linked polymer nanoparticles;
ii) pyrolysis of the composition M' to obtain the metal matrix polymer derived ceramic composite comprising the metal and cross-linked polymer derived nanoparticles of ceramic.

In particular, the polymer is a precursor of a ceramic chosen from Si3N4, SiC, BN, AlN, SiCN, SiCO, BCN, SiCNO, SiBCN, SiBCO, SiAlCN, SiMgCN, and SiAlCO. The polymer precursors of said ceramics are well known from the skilled in the art. In a more particular embodiment, the polymer is chosen from:

- polysilazanes, notably polycyclosilazanes, for example polyalkylcyclosilazanes, perhydropolysilazanes, methylhydridocyclosilazanes, alkylhydridocyclosilazanes, polyureidosilazanes, ureamethylvinylsilazanes; polycarbosilazanes; and polysilsesquiazanes; the polymer being in particular a precursor of a Si3N4 or SiCN ceramic;

- polysilylcarbodiimides and polysilsesquicarbodiimides, the polymer being in particular a precursor of a SiCN ceramic;
- polycarbosilanes, notably methylpolycarbosilane, vinylpolycarbosilanes, methylvinylpolycarbosilane, polytitanocarbosilane, allyl hydridopolycarbosilanes, hydridopolycarbosilane; the polymer being in particular a precursor of a SiC ceramic;
- polysiloxanes, notably polyvinylsiloxanes; polycarbosiloxanes, notably polymethylsiloxanes, in particular polymethylhydrosiloxanes (PMHS); and polysilsesquioxanes, notably polyalkylsilsesquioxanes, such as polymethylsilsesquioxanes, polyvinylsilsequioxanes; the polymer being in particular a precursor of a SiCO ceramic;
- polyborosilazanes; the polymer being in particular a precursor of a SiCBN ceramic;
- polyborazylenes and poly[tri(methylamino)borazine], the polymer being in particular a precursor of a BN ceramic;
- polyalkyliminoalanes, the polymer being in particular a precursor of a AlN ceramic;
- polymers obtainable by polymerization of borane, for exemple decaborane, with diamines; the polymer being in particular a precursor of a BCN ceramic;
- polyborosiloxanes; the polymer being in particular a precursor of a SiBCO ceramic;
- and their mixtures, a mixture of polysilazanes and polysiloxanes being in particular a precursor of a SICNO ceramic.

In particular, the composition M is obtained by contacting a mixture of the polymer in liquid form and the metal in micropowder form with a cross-linking agent, in particular for a time comprised from 2 hours to 20 hours, for example of about 8 hours, notably at a temperature from 15°C to 25°C.

By "contacting" is in particular meant containing, in the same container, or mixing, as well known by the skilled in the art.

In another particular embodiment, the composition M is obtained by mixing the metal in micro powder form and cross-linked polymer microparticles, for example by ball-milling, said cross-linked polymer microparticles being in particular obtained from cross-linked polymer particles by grinding, more particularly by ball-milling.

The cross-linked polymer particles are more particularly obtained by contacting the polymer in liquid form with a cross-linking agent, in particular for a time comprised from 2 hours to 20 hours for example of about 8 hours, notably at a temperature from 15°C to 25°C.

In a particular embodiment, the polymer is poly(methylhydrosiloxane) (PMHS).

A cross-linked polymer may be obtained from the corresponding polymer by methods well known from the skilled in the art. These methods are for example UV exposure, thermal treatments, notably at elevated temperatures (such as 15 to 150 or 250°C), optionally in presence of a thermal initiator, oxidative reactions, the use of a free radical initiator, in particular chosen from peroxides, and for example organic peroxides, the use of cross-linking agents, for example amines, such as diamines and polyamines, or a vinyl containing precursor in presence of a platinum-based complex.

In particular, the cross-linking agent is 1,4-diazabicyclo [2.2.2] octane (DABCO). In a particular embodiment, the composition M comprises, based on its total weight:

  ∘ from 75 to 98 wt.%, in particular from 85 to 98 wt.% of the metal in micro powder form; and
  ∘ from 2 to 25 wt.%, in particular from 2 to 15 wt.% of the cross-linked polymer microparticles.

In a particular embodiment, the metal is chosen from the group comprising Al, Mg, Cu, Fe and Ti.

In a particular embodiment, the polymer is poly(methylhydrosiloxane) (PMHS), and the cross-linking agent is 1,4-diazabicyclo [2.2.2] octane, the metal being notably Al.

Cross-linking may for example be performed by adding 5 wt.% of cross-linking agent, in particular DABCO, to the polymer, in particular PMHS. Said cross-linking may for example be performed for 8 hours at room temperature.

In a particular embodiment, the cross-linked polymer is ceraset polysilazane 20, the metal being notably Cu.

In a particular embodiment, the size, in particular the mean size, of the particles of metal within the micro powder range from 10 to 250 μm, notably from 20 to 100 μm, and are in particular of about 50 μm.

In a particular embodiment, the size, in particular the mean size, of the cross-linked polymer microparticles range from about 10 to about 100 μm.

In a particular embodiment, the size, in particular the mean size, of the cross-linked polymer nanoparticles and/or the cross-linked polymer derived nanoparticles of ceramic range from 1 to 1000 nm, and range in particular from 1 to 200 nm, 1 to 100 nm, 50 to 1000 nm.

As well known by the skilled in the art, the desired size of the cross-linked polymer nanoparticles and/or the cross-linked polymer derived nanoparticles can be achieved through the severe plastic deformation, in particular by adjusting the pressure and/or strain applied to the composition M, and/or by applying to the composition M more than one passes (or runs) of severe plastic deformation.

In a particular embodiment, the metal within the composition M' is in the form of sub-micron size particles, the size, in particular the mean size, of said particles range in notably from 50 to 1000 nm, and range in particular from 200 to 1000 nm.

In a particular embodiment, the severe plastic deformation is performed at a temperature from 15 to 800°C, in particular from 15 to 30°C, or from 100, 200, 300, 400, 500, 600 or 700 to 800°C.

In a particular embodiment, the severe plastic deformation is chosen from friction assisted lateral extrusion, high pressure torsion, equal channel angular pressing or extrusion, twist extrusion, accumulative roll bonding, the severe plastic deformation being more particularly friction assisted lateral extrusion or high pressure torsion.

In a more particular embodiment, the severe plastic deformation is a friction assisted lateral extrusion process step wherein the composition M is pushed through a first channel of a die towards a rough driving punch moving tangentially to said first channel so that said composition flows laterally into a second channel being the gap between the die and the driving punch.

Said gap has for example a height ranging from 0.2 to 2 mm.

In a particular embodiment, the rough driving punch has notably a translational movement.

In another particular embodiment, the severe plastic deformation is continuous, said severe plastic deformation being in particular a continuous friction assisted lateral extrusion process.

In a more particular embodiment, the rough driving punch may be a rotating wheel.

In a particular embodiment the composition M is compacted in the channel before the driving punch is moved.

In a particular embodiment the driving punch surface has a roughness (Ra) comprised from 10 $\mu$m to 100 $\mu$m.

In a particular embodiment, the composition M is pushed by a normal punch exerting a pressure comprised from 200 MPa to 2 GPa.

In a particular embodiment, the driving punch surface moves at a speed comprised from 1mm/s to 100 mm/s.

In a particular embodiment, the severe plastic deformation is continuous, said severe plastic deformation being in particular a continuous friction assisted lateral extrusion process, and performed at a temperature from 100, 200, 300, 400, 500, 600 or 700 to 800°C.

In a particular embodiment, the pyrolysis is performed at a temperature from 250 to 1200°C, in particular from 400 to 1000°C, more particularly of about 500°C or about 800°C.

In a particular embodiment, the pyrolysis is performed for 10 minutes to 24 hours, in particular from 20 minutes to 12 hours, for example for about 0.5 hour or about 10 hours, optionally under controlled atmosphere such as argon atmosphere.

In a more particular embodiment, the pyrolysis is performed at a temperature from 400 to 600°C, for example at about 500°C, for 5 to 20 hours, for example for 10 hours, the metal being notably Al.

In a more particular embodiment, the pyrolysis is performed at a temperature from 600 to 1000°C, for example at about 800°C, for 10 minutes to 1 or 2 hours, for example for 0.5 hour, the metal being notably Cu.

In a particular embodiment, the pyrolysis of step ii) is followed by a step iii) of rolling of the metal matrix polymer derived ceramic composite, optionally by a severe plastic deformation technique, notably chosen from equal channel angular pressing or extrusion, accumulative roll bonding, the cross-linked polymer microparticles representing in particular from 2 to 15 wt.% based on the total weight of the composition M.

This step iii) may be performed to remove or reduce if needed the pores that may have been formed during step ii).

In a particular embodiment, step ii) or step iii) if any is followed by a step iv) of heat treatment.

This step (iv) is in particular performed at a temperature from 200 to 500°C, for example at about 350°C.

This step (iv) is in particular performed for 10 minutes to 10 hours, for example for 1 hour.

In a more particular embodiment, step (iv) is performed at a temperature from 300 to 400°C, for example at about 350°C, for 30 minutes to 2 hours, for example for 1 hour, the metal being notably Al.

This step (iv) may be performed to increase if needed the metal ductility.

In another aspect, the invention concerns a metal matrix polymer derived ceramic composite obtainable by the process as defined above.

All the embodiments described above in relation with the process apply here as well, alone or in combination.

In another aspect, the invention concerns a metal matrix polymer derived ceramic composite comprising:

- a metal in micropowder form; and
- cross-linked polymer induced ceramic nanoparticles, said polymer being a precursor of a ceramic.

All the embodiments described above in relation with the process apply here as well, alone or in combination.

In another aspect, the invention concerns the use of a metal matrix polymer derived ceramic composite obtainable by the process as defined above, or of a metal matrix polymer derived ceramic composite comprising a metal in micropowder form and a cross-linked polymer induced ceramic nanoparticles as defined above, for the preparation of devices, in particular devices that are exposed to temperature, for example structural parts of engines, gearboxes, brake platens, aircrafts, or spacecrafts.

## DEFINITIONS

By the acronym "2MPDC2" is meant "metal-matrix polymer-derived-ceramic composite".

By "severe plastic deformation" is in particular meant a step in which a large to very large plastic strain is imposed on a bulk 2MPDC2 composition, in particular on a composition M as defined above, in order to make an ultra-fine grained (UFG) material that has notably grain sizes ranging from 100 to 1000 nm or even smaller than 100 nm. For example, the amount of strain may be minimum 5 von Mises equivalent (large strain) or more than 10 (very large strain).

By "severe plastic deformed 2MPDC2 composition, in particular composition M' " is in particular meant a composition comprising said metal and cross-linked polymer nanoparticles, the polymer being as defined above.

By "pyrolysis" is in particular meant a heat treatment of the severe plastic deformed 2MPDC2 composition, in particular composition M', enabling the obtaining of a material comprising said metal and cross-linked polymer derived nanoparticles of ceramic.

By "nanoparticles" is in particular meant particles having a size, in particular a mean size, ranging from 10 to 100 nm.

By "a precursor of a ceramic", also known as "preceramic polymer" is in particular meant a polymer, preferably a cross-linked polymer, that is suitable to yield a ceramic, notably by pyrolysis, for example by a pyrolysis as defined above.

By "roughness (Ra)" is in particular meant the average distance between the mean line and the peaks and troughs of a given surface. For a given surface, it is therefore the average distance, or arithmetic average of the distances between successive peaks and valleys. "Ra" thus corresponds in particular to the difference between this average distance and the "central line". More particularly, the roughness Ra is measured according to ISO 4287, for example on a Dektak Stylus® profilometer (Bruker).

## FIGURES

Figure 1 illustrates the compression test results carried out at room temperature for different material states, after the HPT processing as described in example 1. Curve identification: Xw means X volume percent polymer, Xn means the number of HPT turns before pyrolysis, all being composites of the invention. P2n: the powder HPT compacted sample without polymer (reference). All samples were subjected to 2 HPT rotations after pyrolysis. CP Al: commercially pure bulk Al 1050 (reference).

Figure 2 shows the microstructure and strength of the final Al MMPDCC product of the invention obtained in example 1 before and after heat treatment at 250°C, 1H (same areas on the sample surface before and after heat treatment), as described in example 2.

Figure 3 deals with the microstructure and strength of the Al product without polymer addition (reference), before and after heat treatment at 250°C, 1H (same areas on the sample surface before and after heat treatment), as described in example 2.

Figure 4 illustrates the microstructure and strength of the bulk Al-1050 metal (reference), before and after heat treatment at 250°C, 1H (same areas on the sample surface before and after heat treatment), as described in example 2.

Figure 5 is a schematic view of the Friction Assisted Lateral Extrusion Process (FALEP) as for instance described in example 3.

Figure 6 is a schematic view of the continuous Friction Assisted Lateral Extrusion Process (continuous FALEP) as for instance described in example 3.

## EXAMPLES

### Example 1: preparation of an aluminum matrix polymer derived ceramic composite of the invention

A process of the invention has been performed with aluminum, in the form of commercially pure aluminum (Al-1050).

The Al metal powder was composed of particles with an average size of about 50 microns. The polymer was poly(methylhydrosiloxane) (PMHS), which was in liquid state.

The first step was to mix said polymer with the cross-linking agent 1,4-diazabicyclo [2.2.2] octane (DABCO) in volume percentage of 5 wt.% of DABCO.

The next step was to mix immediately the obtained polymer with the Al powder in a simple mechanical way, at room temperature.

Two compositions were made: 5 and 10 wt.% of polymer respectively, in respect to the total composition, and Al powder in balance.

After mixing, the material was kept for 8 hours at room temperature for producing the cross linking between the polymer chains of the PMHS.

The next step was the HPT (High Pressure Torsion) processing of the obtained powder, at room temperature which consisted of two steps, with the same HPT equipment.

The first stage was a simple compaction of the powder in a 20 mm diameter round channel to form a disk of 3 mm thickness. The applied maximum pressure was 1.5 GPa.

Then HPT was carried out for deforming the disk by two or three rotations in torsion under the constant compression pressure of 1.5 GPa.

For the pyrolysis step, the obtained disk was heat treated at 500°C for 10 hours under argon protecting atmosphere.

After pyrolysis, the disk was again subjected to HPT, for two turns, under 1.5 GPa compression stress (in order to remove the pores appeared in the bulk material during pyrolysis).

The so-obtained deformed disk was the final product of the process, and a metal matrix polymer derived ceramic composite of the invention.

It is noted that the severe plastic deformation can also be performed at a temperature above room temperature, in particular from 100, 200, 300, 400, 500, 600 or 700 to 800°C. This heating might increase, if necessary, the thermal stability and/or material strength of the composite of the invention.

**Example 2: mechanical and thermal resistance properties of a metal matrix polymer derived ceramic composite of the invention**

The mechanical and thermal resistance properties of the disk obtained in example 1 were examined.

The mechanical testing was in compression and in Vickers hardness measurements.

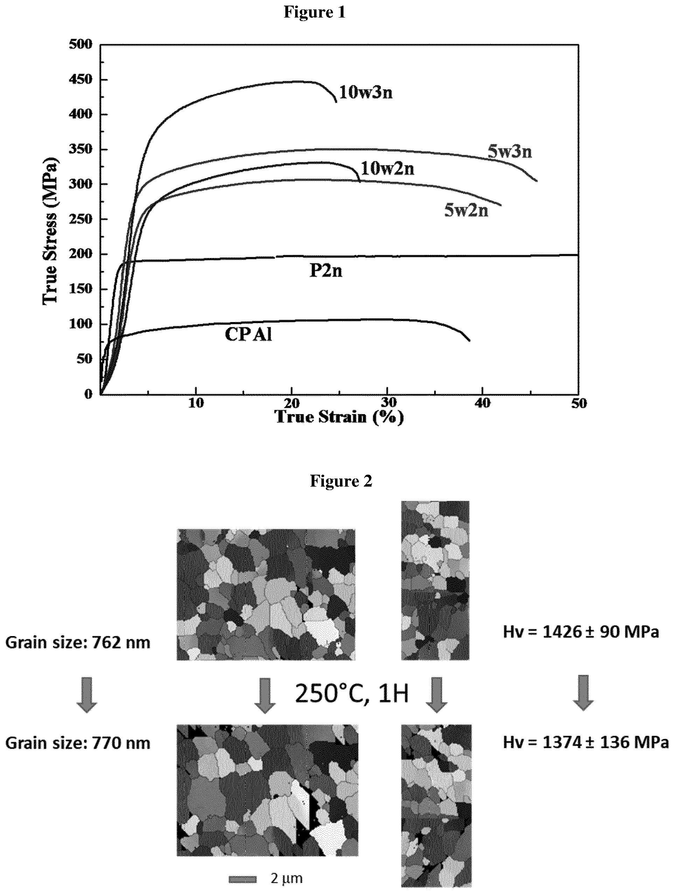

The compression results are shown in **Figure 1.** They were obtained on a Zwick 20t equipment at room temperature, at a constant compression speed of $10^{-2}$ mm/s.

**Figure 1** shows that the 2MPDC2 product shows superior yield stress and resistance in all conditions compared to the bulk Al or the powder compacted without adding the polymer component. The sample without polymer (P2n) shows no fracture in the whole deformation range. All polymer-added materials of the invention have much higher strengths. For both the 5 wt.% and 10 wt.% composition cases, the strength increased with the polymer content. As for the ductility capacity of the material, as can be seen in **Figure 1,** the ductility properties of the composites of the invention are maintained compared to the bulk metal, or even superior.

In order to check the thermal stability of the final 2MPDC2 products of the invention, a heat treatment was applied on the final products of example 1 at 250°C, for 1 hour. The microstructure was examined by EBSD, before and after the heat treatment, exactly in the same surface region of the sample. **Figure 2** shows the microstructures together with the average grain sizes (all grain sizes are calculated in surface fraction) and the Vickers hardness.

As can be seen in **Figure 2,** the microstructure of the composites of the invention has a high thermal stability. The average grain size remained nearly the same after the heat treatment. The material hardness is extremely high for the obtained product (1426 MPa) and remains very high after the heat treatment (1374 MPa).

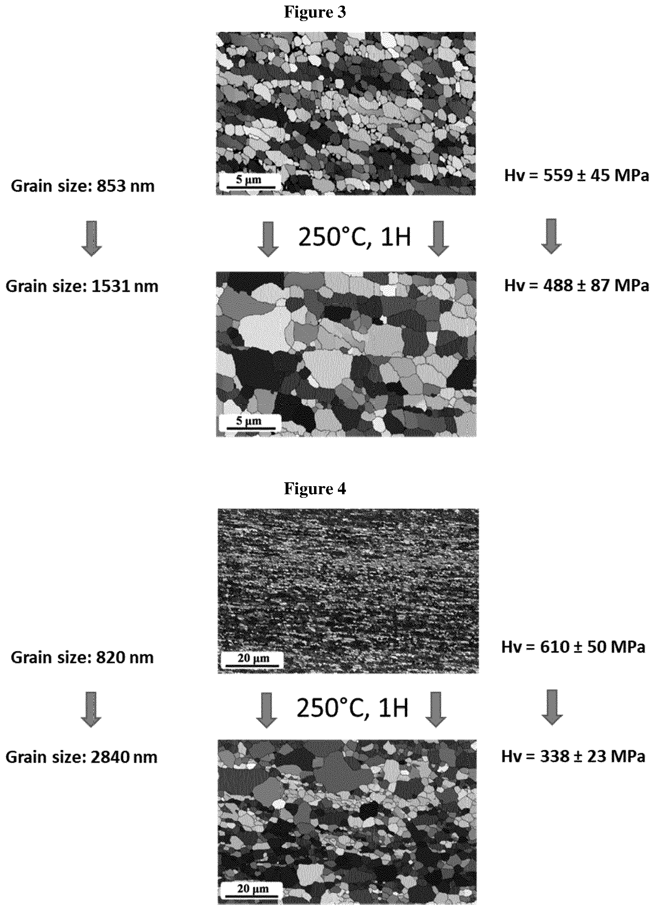

In order to verify the very beneficial effect of the polymer-induced ceramic particles on the microstructure stability and strength of the composites of the invention, the process was repeated by leaving out the polymer during the Al powder compaction by HPT (reference). **Figure 3** shows that the microstructure of this reference is not stable; the grain size increased by a factor of 2 during the heat treatment. The material strength is also very much reduced: from Hv=1426 MPa to 559 MPa, with a further reduction after the heat treatment to 488 MPa. Clearly, the polymer-induced ceramic particles improve simultaneously the stability of the microstructure and the material strength.

Finally, a comparison was made between the simple bulk HPT-processed Al 1050 (reference) and the 2MPDC2 (of the invention) behavior. The result is displayed in **Figure 4.** As can be seen, the microstructure of said reference is very unstable, it is recrystallizing; the grain size increases 3 times. The decrease in material strength is also high: from Hv=610 MPa to 338 MPa.

It is clear from the results shown in Figs. 1-4 that the MMPDCC material of the invention has an excellent thermal stability and material strength compared to the other two classical processing variants (references as mentioned above).

**Example 3: preparation of a metal matrix polymer derived ceramic composite of the invention using a Friction Assisted Lateral Extrusion**

The process of example 1 has been performed using Friction Assisted Lateral Extrusion (FALEP) instead of HPT as severe plastic deformation step.

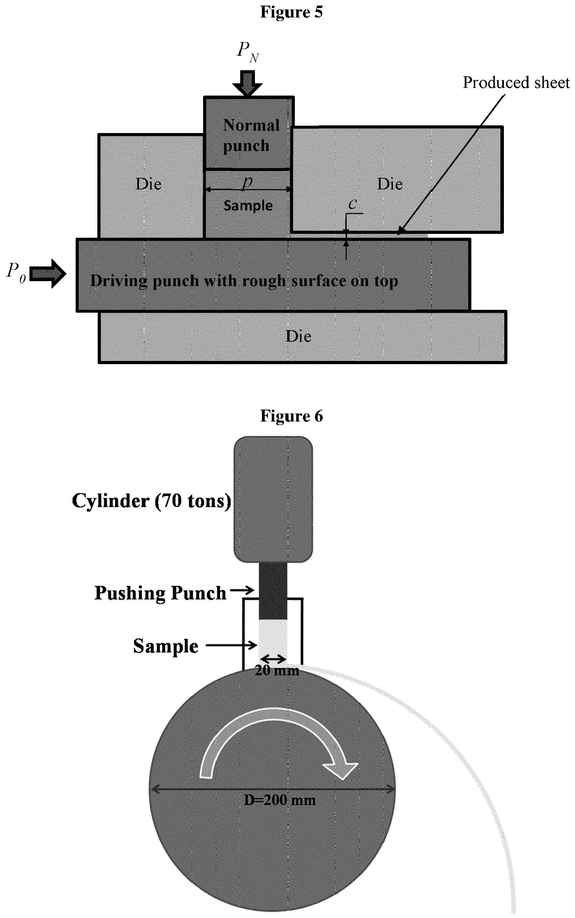

In FALEP, a bulk sample is extruded through a channel into a smaller one, with the help of compression and a tangential force **(figure 5)**. The latter is applied by friction between the driving punch and the sample. The normal and driving punches are moving with a constant speed. The strain in the produced fin is very large, even in one single pass. The following formula, developed for non-equal channel angular extrusion gives a good measure for the shear strain:

$$\gamma = \frac{p}{c} + \frac{c}{p} \text{ (Eq. 1),}$$

wherein p and c are the widths of the incoming and outgoing channels, respectively.

For the FALEP machine used in the present example, p is 20 mm and c can be varied between 2 and 0.2 mm, so the obtained shear strain in one pass is between 10.1 and 100.01. As can be seen, the second member of Eq. 1 can be neglected for these geometries, leading to:

$$\gamma \cong \frac{p}{c} \text{ (Eq. 2).}$$

The deformation is very homogeneous across the thickness of the fin and a simple shear texture can be observed with shear direction parallel to the extrusion direction and shear plane normal in the normal direction of the fin.

In addition, the process of example 1 has been performed using continuous FALEP (CONFALEP) instead of HPT as severe plastic deformation step.

In the continuous version of FALEP, the difference is that the driving punch is a rotating wheel **(figure 6)**.

By rotating the wheel, a continuous strip is produced. The input material is a bar of section 15 mm x 15 mm, with length up to 100 mm. Thus, the produced strip's dimensions can be: 15 mm wide and 1.5 m long for 1 mm thickness.

The die is first filled up with the mixture of the metal and the polymer (both in powder state), then the powder is compacted without moving the wheel. After that, the sample is extruded by rotating the wheel.

**Claims**

1. A process for preparing a metal matrix polymer derived ceramic composite, said process comprising the stages of:

   i) severe plastic deformation on a composition M comprising:

   ◦ a metal in micro powder form; and
   ◦ cross-linked polymer microparticles, said polymer being a precursor of a ceramic, in particular poly(methylhydrosiloxane) ;

   to obtain a severe plastic deformed composition M';
   ii) pyrolysis of the composition M' to obtain the metal matrix polymer derived ceramic composite.

2. The process according to claim 1, comprising the stages of:

   i) severe plastic deformation on a composition M comprising:

   ◦ a metal in micro powder form ; and
   ◦ cross-linked polymer microparticles, said polymer being a precursor of a ceramic ;

   to obtain a severe plastic deformed composition M' comprising said metal and cross-linked polymer nanoparticles;
   ii) pyrolysis of the composition M' to obtain the metal matrix polymer derived ceramic composite comprising the metal and cross-linked polymer derived nanoparticles of ceramic.

3. The process according to anyone of claims 1 to 2, wherein the composition M is obtained by contacting a mixture of the polymer in liquid form and the metal in micropowder form with a cross-linking agent, in particular for a time comprised from 2 to 20 hours, for example of about 8 hours, notably at a temperature from 15°C to 25°C.

4. The process according to anyone of claims 1 to 2, wherein the composition M is obtained by mixing the metal in micro powder form and cross-linked polymer microparticles, for example by ball-milling, said cross-linked polymer microparticles being in particular obtained from cross-linked polymer particles by grinding, more particularly by ball-milling,
the cross-linked polymer particles being in particular obtained by contacting the polymer in liquid form with a cross-linking agent, more particularly for a time comprised from 2 hours to 20 hours, for example of about 8 hours, notably at a temperature from 15°C to 25°C.

5. The process according to anyone of preceding claims, wherein the cross-linking agent is chosen from peroxides and amines, being in particular 1,4-diazabicyclo [2.2.2] octane.

6. The process according to anyone of preceding claims, wherein the composition M comprises, based on its total weight:

   ◦ from 75 to 98 wt.%, in particular from 85 to 98 wt.% of the metal in micro powder form; and
   ◦ from 2 to 75 wt.%, in particular from 2 to 15 wt.% of the cross-linked polymer microparticles.

7. The process according to anyone of preceding claims, wherein the metal is chosen from the group comprising Al, Mg, Cu, Fe and Ti.

8. The process according to anyone of preceding claims, wherein the severe plastic deformation is chosen from friction assisted lateral extrusion, equal channel angular pressing or extrusion, high pressure torsion, accumulative roll bonding, and/or performed at a temperature from 15 to 800°C, in particular from 15 to 30°C, or from 100, 200, 300, 400, 500, 600 or 700 to 800°C.

9. The process according to claim 8, wherein the severe plastic deformation is a friction assisted lateral extrusion process step wherein the composition M is pushed through a first channel of a die towards a rough driving punch moving tangentially to said channel so that said composition flows laterally into a second channel being the gap between the die and the driving punch.

10. The process according to anyone of claims 9, wherein the rough driving punch has a translational movement.

11. The process according to anyone of claims 9, wherein the rough driving punch is a rotating wheel.

12. The process according to anyone of claims 9 to 11, wherein:

> - the driving punch surface has a roughness comprised from 10 $\mu$m to 100 $\mu$m ;
> - the composition M is pushed by a normal punch exerting a pressure comprised from 200 MPa to 2GPa and/or
> - the driving punch surface moves at a speed comprised from 1mm/s to 100 mm/s

13. The process according to anyone of preceding claims, wherein the pyrolysis is performed at a temperature from 250 to 1200°C, in particular from 400 to 1000°C, more particularly of about 500°C or about 800°C, notably for 10 minutes to 24 hours, in particular from 20 minutes to 12 hours, for example for about 0.5 hour or about 10 hours, optionally under controlled atmosphere such as argon atmosphere.

14. The process according to anyone of preceding claims, wherein the pyrolysis of step ii) is followed by a step iii) of rolling of the metal matrix polymer derived ceramic composite, optionally by a severe plastic deformation technique chosen from equal channel angular pressing or extrusion, accumulative roll bonding, the cross-linked polymer microparticles representing in particular from 2 to 15 wt.% based on the total weight of the composition M.

15. A metal matrix polymer derived ceramic composite comprising:

> ◦ a metal in micropowder form; and
> ◦ cross-linked polymer induced ceramic nanoparticles, said polymer being a precursor of a ceramic.

Figure 1

Figure 2

Grain size: 762 nm

Hv = 1426 ± 90 MPa

250°C, 1H

Grain size: 770 nm

Hv = 1374 ± 136 MPa

2 µm

**Figure 3**

Grain size: 853 nm

Hv = 559 ± 45 MPa

250°C, 1H

Grain size: 1531 nm

Hv = 488 ± 87 MPa

**Figure 4**

Grain size: 820 nm

Hv = 610 ± 50 MPa

250°C, 1H

Grain size: 2840 nm

Hv = 338 ± 23 MPa

**Figure 5**

**Figure 6**

Europäisches
Patentamt

European
Patent Office

Office européen
des brevets

# EUROPEAN SEARCH REPORT

**Application Number**

EP 21 30 5327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CZUBAROW P ET AL: "Application of poly(methylsilane) and Nicalon polycarbosilane precursors as binders for metal/ceramic powders in preparation of functionally graded materials", JOURNAL OF MATERIAL SCIENCE, KLUWER ACADEMIC PUBLISHERS, DORDRECHT, vol. 32, no. 8, 1 April 1997 (1997-04-01), pages 2121-2130, XP036838931, ISSN: 0022-2461, DOI: 10.1023/A:1018583024199 [retrieved on 1997-04-01] | 15 | INV. C22C1/05 C22C32/00 |
| A | * 2. Experimental Procedure * | 1-14 | |
| A | US 8 540 797 B2 (RAJ RISHI [US]; SURAPPA MIRLE KRISHNEGOWDA [IN] ET AL.) 24 September 2013 (2013-09-24) * the whole document * | 1-15 | |
| A | WO 2019/053571 A1 (INDIAN INST SCIENT [IN]) 21 March 2019 (2019-03-21) * the whole document * | 1-15 | TECHNICAL FIELDS SEARCHED (IPC) |
| A | AJAY KUMAR P. ET AL: "A novel in-situ polymer derived nano ceramic MMC by friction stir processing", MATERIALS & DESIGN, vol. 85, 1 November 2015 (2015-11-01), pages 626-634, XP055329986, AMSTERDAM, NL ISSN: 0264-1275, DOI: 10.1016/j.matdes.2015.07.054 * the whole document * | 1-5 | C22C B22F |

The present search report has been drawn up for all claims

| Place of search | Date of completion of the search | Examiner |
|---|---|---|
| The Hague | 30 August 2021 | Morra, Valentina |

EPO FORM 1503 03.82 (P04C01)

## ANNEX TO THE EUROPEAN SEARCH REPORT
## ON EUROPEAN PATENT APPLICATION NO.

EP 21 30 5327

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2021

| Patent document cited in search report | | Publication date | Patent family member(s) | | Publication date |
|---|---|---|---|---|---|
| US 8540797 | B2 | 24-09-2013 | US | 2011315920 A1 | 29-12-2011 |
| | | | WO | 2010013080 A1 | 04-02-2010 |
| WO 2019053571 | A1 | 21-03-2019 | NONE | | |

EPO FORM P0459

For more details about this annex : see Official Journal of the European Patent Office, No. 12/82